# DEMANDE DE BREVET EUROPEEN

(11) **EP 0 990 540 A1**
(43) Date de publication de la demande: **05.04.2000**
(21) Numéro de dépôt: 99118954.9
(22) Date de dépôt: 27.09.1999
(51) Int. Cl.: B60H 1/00

(54) **Dispositif de chauffage et/ou climatisation pour véhicule automobile, avec filtre à air démontable**

(30) Priorité: 28.09.1998 FR 9812090
(71) Demandeur: VALEO CLIMATISATION, 78321 La Verrière (FR)
(72) Inventeur: Loup, Didier, 78310 Maurepas (FR)

(57) **Abrégé**

Un dispositif de chauffage et/ou climatisation pour véhicule automobile comprend un boîtier (12) logeant un groupe moto-ventilateur (16) propre à pulser un flux d'air et un filtre à air démontable (18) propre à filtrer le flux d'air pulsé. Le boîtier (12) est disposé dans l'habitacle (H) du véhicule le long du tablier (14) séparant le compartiment moteur (CM) de l'habitacle (H), et il est prévu que le tablier et le boîtier comportent des ouvertures d'accès respectives (32, 30) disposées en regard l'une de l'autre pour permettre le retrait du filtre (28) hors du boîtier par le compartiment moteur, son échange éventuel et sa réinsertion dans le boîtier.

## Description

L'invention se rapporte aux dispositifs de chauffage et/ou climatisation pour les véhicules automobiles.

Elle concerne plus particulièrement un dispositif comprenant un boîtier logeant un groupe moto-ventilateur propre à pulser un flux d'air et un filtre à air démontable propre à filtrer le flux d'air puisé, le boîtier étant propre à être disposé dans l'habitacle. Dans un dispositif de ce type, le groupe moto-ventilateur, encore appelé pulseur, comporte un boîtier logeant une turbine centrifuge entraînée par un moteur pour refouler un flux d'air sous pression vers une conduite de sortie. Ce flux d'air traverse ensuite un filtre à air puis un bloc de chauffage-réfrigération monté en aval et comportant des échangeurs de chaleur (radiateur et éventuellement évaporateur) permettant de réchauffer ou refroidir l'air gui sera ensuite délivré à l'habitacle par diverses conduites et bouches de distribution.

Dans la plupart des dispositifs connus, le groupe moto-ventilateur, le filtre à air et le bloc de chauffage-réfrigération sont placés dans une configuration généralement alignée, ce qui augmente l'encombrement global du dispositif. En outre, une telle configuration ne permet pas toujours un démontage aisé du filtre à air pour pouvoir, à intervalles réguliers, contrôler l'état du filtre et échanger un filtre usagé contre un filtre neuf.

Différentes configurations de filtre ont déjà été proposées en vue de faciliter le démontage. Ainsi, il est connu de démonter le filtre à air à partir de l'habitacle, comme enseigné par exemple par DE-A-40 04 501 et FR 2 731 657. Cependant, le filtre est généralement difficilement accessible à partir de l'habitacle et le tableau de commande ne dispose pas toujours de suffisamment d'espace pour y disposer une trappe d'accessibilité au filtre.

D'autre part, le document EP 0 744 309 enseigne qu'il est possible d'accéder au filtre à air à partir du séparateur d'eau. Mais, cet endroit est généralement exigu si bien que l'introduction et le positionnement du filtre en aval du séparateur d'eau n'est généralement pas facile. De plus, le bouchon refermant le filtre doit avoir une étanchéité à l'eau parfaite.

En outre, ces solutions connues ne permettent pas de réduire l'encombrement du dispositif.

C'est en conséquence un but de l'invention de proposer un dispositif de chauffage et/ou climatisation possédant un encombrement réduit, spécialement dans la direction de l'axe longitudinal du véhicule, tout en procurant des moyens permettant un démontage aisé du filtre à air.

Elle propose à cet effet un dispositif de chauffage et/ou climatisation du type défini en introduction, dans lequel au moins une partie du boîtier est adjacente au tablier et dans lequel le tablier et le boîtier comportent des ouvertures d'accès respectives disposées en regard l'une de l'autre pour permettre le retrait du filtre hors du boîtier par le compartiment moteur, son échange éventuel et sa réinsertion dans le boîtier.

Cette caractéristique autorise notamment une configuration non alignée de l'ensemble formé par le groupe moto-ventilateur, le filtre à air et le bloc de chauffage-réfrigération, étant donné que le filtre à air peut être placé dans une partie du boîtier qui est immédiatement adjacente au tablier séparant le compartiment moteur de l'habitacle. Une telle configuration permet également de placer le groupe moto-ventilateur dans une position adjacente au tablier, ce qui diminue l'encombrement global du dispositif.

Dans une forme de réalisation de préférée de l'invention, le filtre à air est disposé entre le groupe moto-ventilateur et l'échangeur de chaleur. Généralement, le filtre est disposé en amont du pulseur. Or, la section de passage d'air à cette endroit est faible. Ainsi, les filtres que l'on dispose à cet endroit doivent avoir une dimension réduite et doivent par conséquent être changés plus souvent afin d'assurer un minimum de perte de charge au dispositif.

Selon une autre caractéristique de l'invention, le groupe moto-ventilateur et le filtre à air sont disposés côte à côte dans la direction transversale du véhicule.

Autrement dit, le groupe moto-ventilateur et le filtre à air peuvent être placés tous deux dans une position adjacente au tablier dite "position semi-centrée", ce qui permet de diminuer l'encombrement du dispositif, spécialement dans la direction de l'axe longitudinal du véhicule.

Selon encore une autre caractéristique de l'invention, le groupe moto-ventilateur comporte une turbine centrifuge propre à être entraînée en rotation autour d'un axe horizontal parallèle à l'axe longitudinal du véhicule.

Dans une forme de réalisation de l'invention, le dispositif comporte une trappe accessible par l'ouverture du tablier et propre à obturer l'ouverture du boîtier. Dans ce cas, seul le tablier est obturé par la trappe et il suffit seulement d'enlever cette trappe pour accéder au filtre.

En complément, le dispositif peut comprendre une autre trappe propre à obturer l'ouverture du tablier.

Dans une forme de réalisation préférée, le dispositif comporte une trappe propre à obturer à la fois l'ouverture du tablier et l'ouverture du boîtier. En pareil cas, il est avantageux que la trappe comporte un volet propre à obturer l'ouverture du tablier, du côté du compartiment moteur et un bouchon rattaché au volet et propre à assurer l'obturation conjointe de l'ouverture du tablier et de l'ouverture du boîtier.

De façon préférentielle, ce bouchon est formé d'au moins une mousse isolante. En particulier, ce bouchon comporte avantageusement une enveloppe extérieure en mousse dense entourant une garniture intérieure en mousse légère servant au calage du filtre.

Dans la description qui suit, faite à titre d'exemple, on se réfère aux dessins annexés, sur lesquels :
- la figure 1 est une vue en coupe longitudinale d'un dispositif de chauffage et/ou climatisation selon une forme de réalisation préférée de l'invention ;
- la figure 2 est une vue en coupe selon la ligne II-II de la figure 1 ;
- la figure 3 est une vue en coupe partielle correspondant à la figure 1 dans une variante de réalisation ;
- la figure 4 est une vue en coupe de la trappe du dispositif de la figure 3 ; et
- la figure 5 est une vue en coupe analogue à la figure 1 dans une autre forme de réalisation.

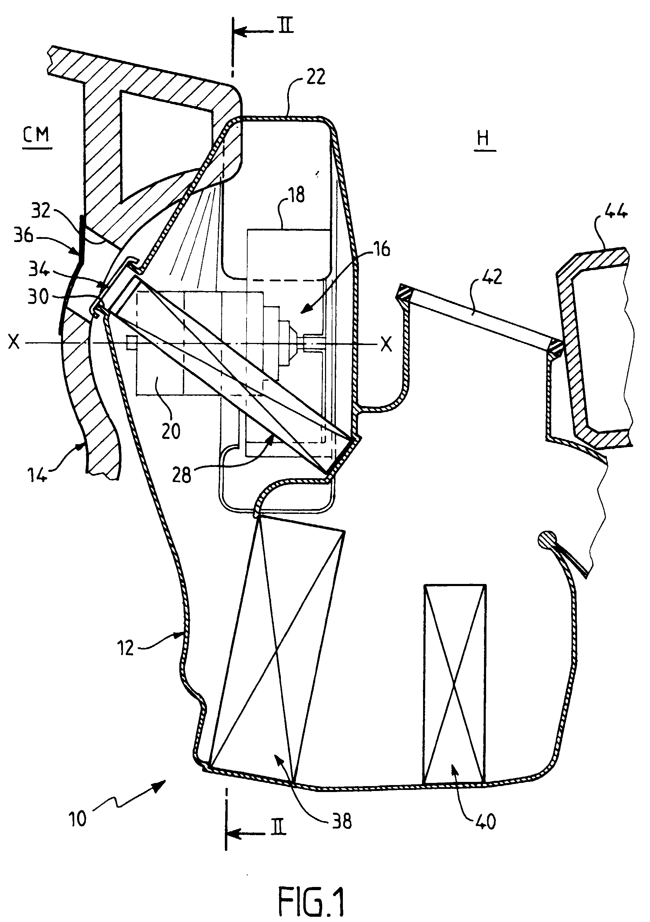

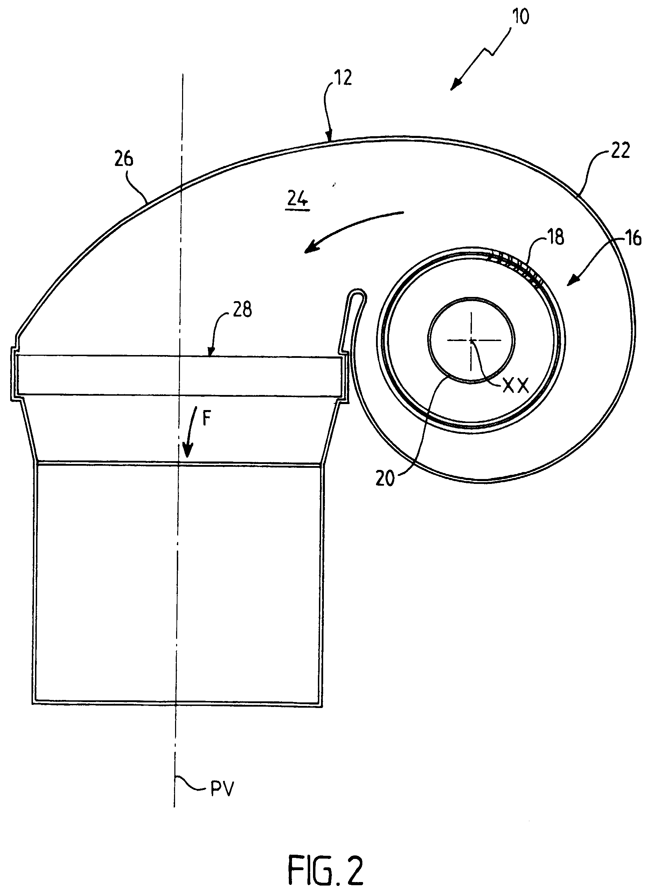

On se réfère d'abord aux figures 1 et 2 qui représentent un dispositif de chauffage et/ou climatisation désigné dans son ensemble par la référence 10. Ce dispositif comprend un boîtier 12 qui est logé dans l'habitacle H d'un véhicule automobile, et plus précisément le long d'un tablier 14 formant cloison de séparation entre le compartiment moteur CM et l'habitacle H.

Le boîtier 10 loge tout d'abord un groupe moto-ventilateur 16 comportant essentiellement une turbine centrifuge 18 entraînée par un moteur électrique 20 autour d'un axe XX qui, dans l'exemple, est sensiblement horizontal et parallèle à l'axe longitudinal (ou axe des X) du véhicule. La turbine est entraînée en rotation dans un élément 22 du boîtier, appelé "volute" qui enveloppe circonférentiellement avec une section croissante la turbine. Cette volute a pour fonction de dévier selon une direction sensiblement tangentielle le flux d'air refoulé radialement par la turbine. Ce flux d'air quitte ainsi la volute par une sortie 24 et est ensuite dévié par une paroi 26 du boîtier vers un filtre à air 28.

Comme on peut le voir sur les figures 1 et 2, le groupe moto-ventilateur 16 est disposé dans une position adjacente au tablier 14, et il en est de même du filtre à air 28, si bien que le groupe moto-ventilateur et le filtre à air sont disposés dans des positions adjacentes dans la direction transversale du véhicule (c'est-à-dire perpendiculairement à l'axe longitudinal). Ceci procure une position dite "semi-centrée", dans laquelle le boîtier est centré par rapport au plan vertical médian PV du véhicule (figure 2), à l'exception du groupe moto-ventilateur qui se trouve déporté du côté droit ou du côté gauche de l'habitacle.

Le filtre à air 28 est constitué d'une cartouche démontable qui est disposée dans une position inclinée, la cartouche étant ascendante vers l'avant, c'est-à-dire vers le compartiment moteur CM.

Pour permettre le démontage du filtre à air 28, le boîtier 12 et le tablier 14 sont pourvus d'ouvertures respectives 30 et 32 disposées en regard l'une de l'autre (figures 1 et 2). L'ouverture 30 est munie d'une trappe 34 qui est accessible à partir du compartiment moteur, au travers de l'ouverture 32 du tablier. Dans cette forme de réalisation, l'ouverture 32 peut être laissée libre, ou on peut, en variante, prévoir une autre trappe 36 destinée à obturer l'ouverture 32, et réalisée indépendante de la trappe 34.

Le flux d'air filtré qui a quitté le filtre traverse ensuite un bloc de chauffage-réfrigération comprenant au moins un échangeur de chaleur et, dans l'exemple, un évaporateur 38 relié à un circuit de climatisation classique et un radiateur de chauffage 40, lequel est habituellement traversé par un fluide chaud, tel que le liquide de refroidissement du moteur du véhicule.

Le flux d'air filtré traverse ce bloc pour être refroidi et/ou réchauffé et être ensuite distribué dans l'habitacle H par différentes conduites et bouches de distribution. Pour des fins de simplification, on a seulement représenté sur la figure 1 l'une des bouches 42 servant au dégivrage/désembuage du pare-brise. Bien entendu, le dispositif comporte aussi d'autres bouches, en particulier des bouches d'aération prévues sur la planche de bord et des bouches débouchant vers la partie inférieure de l'habitacle.

Comme on peut le voir sur la figure 1, du fait de la disposition conjointe du groupe moto-ventilateur et du filtre à air le long du tablier, le dispositif présente un encombrement réduit dans la direction longitudinale ce qui permet de l'intégrer au moins en partie entre le tablier et un réceptacle 44 servant à loger un auto-radio ou un autre accessoire du même genre.

Ainsi, pour permettre le retrait du filtre, il suffit, après avoir ouvert le capot moteur, d'enlever successivement les trappes 36 et 34 et d'extraire le filtre à air dans une direction inclinée ascendante. Ceci permet de contrôler l'état du filtre et de le remplacer, si nécessaire, par un filtre neuf, si le filtre est usagé.

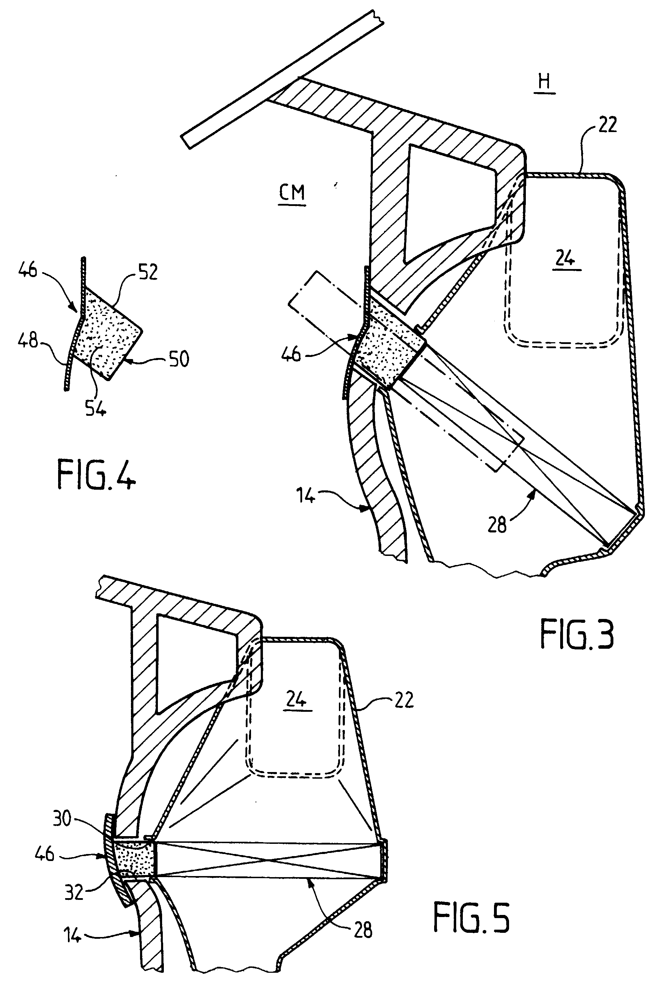

Dans la forme de réalisation de la figure 3, le filtre 28 adopte une position inclinée analogue à celle de la figure 1. Par contre, le dispositif comporte une seule trappe 46 propre à assurer l'obturation conjointe des ouvertures respectives 30 et 32 du boîtier et du tablier. Cette trappe 46 (figure 4) comprend un volet 48 formant porte de fermeture venant s'adapter contre le tablier, du côté du compartiment moteur. Ce volet 48 est rattaché à un bouchon 50 ayant une forme adaptée aux ouvertures 30 et 32 pour assurer l'obturation conjointe de ces dernières, lorsque la trappe 46 est mise en place. Ce bouchon 50 comporte une enveloppe 52 réalisée dans une mousse dense et formant bouchon proprement dit. Cette enveloppe entoure une garniture intérieure 54 réalisée en mousse légère et servant au calage du filtre à air lorsque la trappe 46 est mise en place. Il en résulte que le filtre à air est parfaitement maintenu en position dans le boîtier.

Dans la forme de réalisation de la figure 5, à laquelle on se réfère maintenant, le dispositif comprend une structure générale analogue à celle de la figure 1. La principale différence réside dans le fait que le filtre à air 28 est ici placé dans une position sensiblement horizontale. Il en résulte que les ouvertures respectives 30 et 32 du boîtier et du tablier sont ménagées dans des endroits différents et en regard l'une de l'autre. Ainsi, le retrait du filtre s'effectue par un mouvement généralement horizontal.

Comme dans le cas précédent, il est possible de prévoir soit une seule trappe servant à la fermeture de l'ouverture du boîtier, soit deux trappes servant respectivement à l'obturation de l'ouverture du boîtier et de l'ouverture du tablier, soit encore une trappe commune servant à l'obturation conjointe des deux ouvertures. Dans l'exemple, on prévoit une seule trappe 46 analogue à celle des figures 3 et 4.

Dans le cas où on utilise une seule trappe avec un bouchon comportant deux mousses de densité différente, l'enveloppe en mousse dense réalise une fonction d'isolation thermique et une fonction d'étanchéité, tandis que la garniture en mousse légère réalise une fonction de calage du filtre à air.

Bien entendu, le dispositif de l'invention est susceptible de nombreuses variantes, du moment que le filtre à air se situe dans une position adjacente au tablier pour permettre son extraction par le compartiment moteur, y compris par le séparateur d'eau.

## Revendications

1. Dispositif de chauffage et/ou climatisation pour véhicule automobile qui comporte un tablier (14) séparant le compartiment moteur (CM) de l'habitacle(H), le dispositif comprenant un boîtier (12) logeant un groupe moto-ventilateur (16) propre à pulser un flux d'air, un échangeur de chaleur et un filtre à air démontable (28) propre à filtrer le flux d'air pulsé,
caractérisé en ce qu'au moins une partie d'une paroi du boîtier est disposé adjacente au tablier, et en ce que le tablier (14) et le boîtier (12) comportent des ouvertures d'accès respectives (32, 30) disposées en regard l'une de l'autre pour permettre le retrait du filtre (28) hors du boîtier par le compartiment moteur, son échange éventuel et sa réinsertion dans le boîtier.

2. Dispositif selon la revendication 1, caractérisé en ce que le filtre à air (28) est disposé entre le groupe moto-ventilateur (16) et l'échangeur de chaleur.

3. Dispositif selon l'une des revendications 1 à 2, caractérisé en ce que le groupe moto-ventilateur (16) et le filtre à air (28) sont disposés côte à côte dans la direction transversale du véhicule.

4. Dispositif selon l'une des revendications 1 à 3, caractérisé en ce que le groupe moto-ventilateur (16) comporte une turbine centrifuge (18) propre à être entraînée en rotation autour d'un axe horizontal (XX) parallèle à l'axe longitudinal du véhicule.

5. Dispositif selon l'une des revendications 1 à 4, caractérisé en ce qu'il comporte une trappe (34) accessible par l'ouverture (32) du tablier et propre à obturer l'ouverture (30) du boîtier (12).

6. Dispositif selon la revendication 5, caractérisé en ce qu'il comporte en outre une trappe (36) propre à obturer l'ouverture (32) du tablier.

7. Dispositif selon l'une des revendications 1 à 4, caractérisé en ce qu'il comporte une trappe (46) propre à obturer à la fois l'ouverture (32) du tablier et l'ouverture (30) du boîtier.

8. Dispositif selon la revendication 7, caractérisé en ce que la trappe (46) comporte un volet (48) propre à obturer l'ouverture (32) du tablier, du côté du compartiment moteur, et un bouchon (50) rattaché au volet et propre à assurer l'obturation conjointe de l'ouverture (32) du tablier et de l'ouverture (30) du boîtier.

9. Dispositif selon la revendication 8, caractérisé en ce que le bouchon (50) est formé d'au moins une mousse isolante.

10. Dispositif selon la revendication 9, caractérisé en ce que le bouchon (50) comporte une enveloppe extérieure (52) en mousse dense qui entoure une garniture intérieure (54) en mousse légère servant au calage du filtre.
